# FASCICULE DE BREVET EUROPEEN

(11) **EP 3 119 917 B1**
(45) Date de publication et mention de la délivrance du brevet: **08.07.2020**
(21) Numéro de dépôt: 15714577.2
(22) Date de dépôt: 05.03.2015
(51) Int. Cl.: C22C 1/10, B22F 3/20, C22C 47/04, C22C 47/08, C22C 49/04, C22C 49/06, C22C 49/14, H01B 1/02, H01B 1/04, C22C 26/00, C01B 32/174

(54) **PROCEDE DE FABRICATION D'UN MATERIAU COMPOSITE**
VERFAHREN ZUR HERSTELLUNG EINES VERBUNDWERKSTOFFS
PROCESS FOR MANUFACTURING A COMPOSITE MATERIAL

(30) Priorité: 18.03.2014 FR 1452231
(43) Date de publication de la demande: 25.01.2017
(73) Titulaire: Nexans, 92400 Courbevoie (FR)
(72) Inventeur: MASQUELIER, Nicolas, F-59133 Phalempin (FR); COMORET, Emilien, F-59171 Hornaig (FR)
(74) Mandataire: Feray, Valérie
(86) Numéro de dépôt international: PCT/FR2015/050548
(87) Numéro de publication internationale: WO 2015/140443

(56) Documents cités:
- WO-A2-02/099824
- FR-A1- 2 968 676
- US-A1- 2012 121 890
- US-A1- 2012 267 141

## Description

La présente invention se rapporte à un procédé de fabrication d'un matériau composite comprenant des nanotubes de carbone fonctionnalisés et une matrice métallique, à un procédé de fabrication d'un élément électriquement conducteur allongé, et à un câble électrique comprenant un tel élément électriquement conducteur allongé.

La présente invention s'applique typiquement, mais non exclusivement aux domaines de l'automobile, de l'aéronautique, de l'informatique, de l'électronique (e.g. semi-conducteurs) et du bâtiment, dans lesquels des matériaux composites sont de plus en plus utilisés. De tels matériaux composites peuvent comprendre une matrice métallique (e.g. aluminium, magnésium, titane, etc...) et un agent carboné (e.g. fibres de carbone) comme renfort. Les matériaux composites sont élaborés pour tenter de concilier les qualités des métaux (ductilité, conductivité, bonne tenue face au vieillissement et aux températures élevées, etc...) avec la légèreté et les bonnes caractéristiques mécaniques propres aux agents carbonés.

La présente invention s'applique en particulier aux câbles d'énergie à basse tension (notamment inférieure à 6kV) ou à moyenne tension (notamment de 6 à 45-60 kV) ou à haute tension (notamment supérieure à 60 kV, et pouvant aller jusqu'à 800 kV), qu'ils soient en courant continu ou alternatif, dans les domaines du transport d'électricité aérien, sous-marin, terrestre ou de l'aéronautique.

Plus particulièrement, l'invention concerne un câble électrique présentant de bonnes propriétés mécaniques et de conductivité électrique.

Du document CN-A-101565782 est connu un procédé de fabrication d'un matériau composite comprenant des nanotubes de carbone et une matrice métallique (e.g. aluminium, zinc, fer, nickel, etc...), ledit procédé comprenant une étape de mélange d'une poudre de métal avec des nanotubes de carbone, de l'acide stéarique et un solvant tel qu'un alcool, puis une étape de broyage du mélange de l'étape précédente dans un broyeur à billes pour former un mélange uniforme, et enfin une étape de compression du mélange uniforme de l'étape précédente dans un moule préchauffé à 80°C pour former un matériau composite sous la forme d'une masse solide. La masse solide obtenue peut ensuite être introduite dans un bain métallique liquide et coulée.

Au cours de l'étape de broyage, la mise en œuvre conjointe de l'acide stéarique et du solvant permet à la fois d'éviter le soudage à froid des particules de métal lors de leur déformation plastique et de les protéger de façon momentanée vis-à-vis de l'oxydation, notamment par l'air ambiant et/ou par l'humidité. Toutefois, cette étape de broyage ne facilite pas la dispersion homogène des nanotubes de carbone dans la matrice métallique. De plus, bien que permettant d'éviter l'enchevêtrement des nanotubes de carbone en pelotes, elle dégrade les propriétés mécaniques et électriques desdits nanotubes de carbone. En outre, le procédé ne décrit pas les étapes conduisant à la fabrication d'un câble électrique à partir dudit matériau composite, et de ce fait, ne permet pas de garantir un câble électrique ayant de bonnes propriétés mécaniques et électriques.

En parallèle, des équipes de recherche se sont intéressées à la technologie des mousses métalliques. Les mousses métalliques sont des structures alvéolaires constituées d'un métal solide, contenant un volume important de gaz (i.e. contenant des pores remplis de gaz). Les pores peuvent être scellés (mousse à cellules fermées), ou ils peuvent former un réseau interconnecté (mousse à cellules ouvertes). La principale caractéristique des mousses métalliques est une porosité très élevée, en général de 75 à 95% du volume.

Une mousse métallique peut aussi bien désigner une mousse syntactique, qu'une éponge métallique ou qu'une mousse métallique en tant que telle.

Une mousse syntactique est un métal cellulaire stochastique (i.e. avec une répartition de la porosité aléatoire) dont les cavités sont sphériques et interconnectées entre elles. Dans une mousse syntactique, les pores communiquent entre eux par des orifices de dimension très inférieure à leur taille moyenne. Une mousse syntactique est à pores semi-ouverts.

Une éponge métallique est un métal cellulaire stochastique dont les cavités sont interconnectées entre elles et dans lequel le métal se répartit sous forme de ligaments. Dans une éponge métallique, les pores communiquent les uns avec les autres. Une éponge métallique est à pores ouverts.

Une mousse métallique en tant que telle est un métal cellulaire présentant des cavités isolées les unes des autres, globalement polyédriques, et séparées par des cloisons fines, appelées films. Dans une mousse métallique en tant que telle, les pores sont isolés les uns des autres. Une mousse métallique est à pores fermés.

Toutes ces mousses métalliques offrent des propriétés physiques et mécaniques très intéressantes du fait de leur structure, puisqu'elles présentent une bonne rigidité associée à un poids spécifique faible et à d'excellentes caractéristiques d'amortissement. Elles offrent donc un grand potentiel dans les structures légères, l'absorption d'énergie et le contrôle thermique, et sont utilisées dans des domaines tels que l'aéronautique, l'aérospatiale, et également l'engineering mécanique (e.g. fabrication de pièces de sécurité en automobile telles que parechocs, barres de déformation, capots, etc...).

Une mousse métallique est dite régulière lorsque la structure est ordonnée. A titre d'exemple, le procédé par voie de fonderie « *CastFoam* » mis au point par le CTIF (Centre Technique des industries de la Fonderie) permet de réaliser des structures métalliques avec des alvéoles régulières dont la taille peut varier de 10 mm à 70 mm. Pour fabriquer cette mousse, des plaques en sable aggloméré dont la forme est étudiée pour chaque application, sont utilisées comme noyaux de fonderie. Le procédé consiste en la conception de ces plaques et l'infiltration d'un métal liquide à l'intérieur du réseau poreux créé. Il permet de réaliser des mousses dites "parfaites", c'est-à-dire qu'elles respectent les conditions de Plateau notamment en réalisant des pores de la forme d'un octaèdre tronqué de Kelvin (appelé conjecture de Kelvin) [Kelvin, Philosophical Magazine, 1887, 24 (151), 503].

Toutefois, aucun des procédés de l'art antérieur n'utilise les mousses métalliques pour conduire à un matériau composite ou à un élément électriquement conducteur pour câble électrique présentant des propriétés électriques et mécaniques améliorées.

Le document US 2012-267141 décrit un procédé de fabrication d'un matériau composite comprenant des nanotubes de carbone et de l'aluminium mettant en œuvre un élastomère.

Le document FR 2 968 676 décrit un procédé d'introduction de nanocharges d'origine carbonique dans une poudre de métal ou d'un alliage de métaux.

Le but de la présente invention est de pallier les inconvénients des techniques de l'art antérieur en proposant un procédé de fabrication d'un matériau composite comprenant des nanotubes de carbone fonctionnalisés et au moins un métal, ledit procédé étant facile à mettre en œuvre et permettant de garantir et de maintenir un bon transfert de charge mécanique et électrique entre le métal et les nanotubes de carbone tout en évitant la dégradation des nanotubes de carbone, et ainsi d'obtenir un matériau composite présentant de bonnes propriétés mécaniques et électriques.

La présente invention a pour premier objet un procédé de fabrication d'un matériau composite comprenant des nanotubes de carbone fonctionnalisés et une matrice métallique, caractérisé en ce qu'il comprend au moins les étapes suivantes :
i) la dispersion de nanotubes de carbone fonctionnalisés ou d'un mélange de nanotubes de carbone fonctionnalisés et d'au moins un métal, dans une mousse métallique à pores ouverts ou semi-ouverts pour former une structure composite,
ii) le compactage de la structure composite obtenue à l'étape précédente i) pour former un matériau composite sous forme d'une masse solide.

Grâce au procédé de l'invention, un matériau composite comprenant des nanotubes de carbone et une matrice métallique peut être ainsi facilement formé, tout en présentant de bonnes propriétés mécaniques et de conductivité électrique, notamment de par la dispersion homogène des nanotubes de carbone dans la mousse métallique.

Les nanotubes de carbone sont notamment une forme allotropique du carbone appartenant à la famille des fullerènes. Plus particulièrement, les nanotubes de carbone sont des feuillets de graphène enroulés sur eux-mêmes et fermés à leur extrémité par des demi-sphères semblables à des fullerènes.

Dans la présente invention, les nanotubes de carbone comprennent aussi bien les nanotubes monoparois ou monofeuillets (en anglais : *Single Wall Carbon Nanotubes, SWNT*) comprenant un seul feuillet de graphène et les nanotubes multiparois ou multifeuillets (en anglais : *Multi Wall Carbon Nanotubes, MWNT*) comprenant plusieurs feuillets de graphène emboîtés les uns dans les autres à la manière des poupées russes, ou bien un seul feuillet de graphène enroulé plusieurs fois sur lui-même.

Dans la présente invention, l'expression « nanotubes de carbone fonctionnalisés » signifie que les nanotubes de carbone présentent en surface des groupements chimiques pouvant se lier au métal de la mousse métallique, éventuellement à des atomes de carbone d'autres nanotubes de carbone, et éventuellement au métal du mélange de l'étape i). Lesdits groupements chimiques peuvent donc représenter des sites d'accroche entre le métal de la mousse métallique et les nanotubes de carbone, éventuellement entre les atomes de carbone des nanotubes de carbone, et éventuellement entre le métal du mélange de l'étape i) et les nanotubes de carbone lors de la mise en œuvre du procédé de l'invention.

En effet, les nanotubes de carbone en tant que tels (i.e. nanotubes de carbones nus ou non fonctionnalisés), même s'ils présentent d'excellentes propriétés électriques, thermiques et mécaniques, se dispersent difficilement dans un métal. L'enchevêtrement des nanotubes de carbone en pelotes, associé à une faible réactivité de surface, empêche leur dispersion. Il est donc avantageux d'avoir des nanotubes de carbone dont la surface est modifiée de façon covalente.

De tels groupements chimiques peuvent être choisis parmi un atome d'halogène, un groupe fluoroalkyle, un groupe fluoroaryle, un groupe fluorocycloalkyle, un groupe fluoroaralkyle, un groupe SO₃H, un groupe COOH, un groupe PO₃H₂, un groupe OOH, un groupe OH, un groupe CHO, un groupe CN, un groupe COCI, un groupe COSH, un groupe SH, et les groupes suivants : R'CHOH, NHR', COOR', SR', CONHR', OR' et NHCO₂R', dans lesquels R' est choisi parmi un atome d'hydrogène, un groupe alkyle, un groupe aryle, un groupe aryleSH, un groupe cycloalkyle, un groupe aralkyle, un groupe cycloaryle et un groupe poly(alkyléther). L'incorporation directe de tels groupements chimiques en surface des nanotubes de carbone permet d'améliorer l'interface nanotubes de carbone/métal lors de la mise en contact des nanotubes de carbone avec au moins un métal.

Selon une première variante, les nanotubes de carbone fonctionnalisés utilisés lors de la mise en œuvre de l'étape i) du procédé conforme à l'invention sont de grade commercial. A titre d'exemple, on peut citer les nanotubes de carbone multifeuillets fonctionnalisés par des groupements carboxyle, tels que ceux commercialisés sous la dénomination commerciale MWNT-COOH® par Alpha Nano Tech Inc. ou par Nanocyl, ou bien les nanotubes de carbone multifeuillets fonctionnalisés par des groupements hydroxyles, tels que ceux commercialisés sous la dénomination commerciale MWNT-OH® par NanoAmor.

Selon une deuxième variante, les nanotubes de carbone fonctionnalisés sont obtenus par fonctionnalisation de nanotubes de carbone nus.

Différentes méthodes bien connues de l'homme du métier existent pour modifier des surfaces de nanotubes de carbone. On peut les regrouper en deux grandes classes de méthodes :
- Certaines méthodes mettent en œuvre des oxydants forts et permettent la formation de groupements chimiques oxygénés : par oxydation électrochimique au potentiel de décomposition de l'eau, par traitement acide (sulfurique ou nitrique), par emploi de KMnO₄, par oxydation en phase gazeuse ou par traitement plasma. On parle alors de méthodes de fonctionnalisation non spécifiques, de par la grande variété des groupements chimiques oxygénés formés sur la surface carbonée. De tels groupements chimiques oxygénés sont par exemple les groupements dicétones, éthers, acides carboxyliques, esters, hydroxyles, énols, etc...
- D'autres méthodes, plus douces, permettent le greffage de groupements chimiques spécifiques : il s'agit de méthodes d'oxydation électrochimique d'amines primaires et secondaires, d'alcools, de carboxylates, d'hydrazides ou encore de réduction de sels de diazonium.

On citera à titre d'exemple, l'oxydation de surface des nanotubes de carbone, qui est actuellement une des méthodes les plus utilisées pour fonctionnaliser lesdits nanotubes de carbone. En particulier, ladite oxydation de surface peut être effectuée en introduisant des nanotubes de carbone non fonctionnalisés dans un milieu liquide tel qu'un alcool inférieur (c'est-à-dire un alcool ayant de 1 à 5 atomes de carbone), en les dispersant par ultrasons, et en ajoutant à la dispersion un agent oxydant tel que le mélange acide nitrique/acide sulfurique ou de l'eau oxygénée. On obtient ainsi des nanotubes de carbone fonctionnalisés présentant en surface des groupements chimiques oxygénés de type groupements dicétones, éthers, acides carboxyliques, esters, hydroxyles, énols, etc...

La fonctionnalisation des nanotubes de carbone favorise le transfert de charge mécanique et électrique au sein du matériau composite entre les nanotubes de carbone et la matrice métallique.

Dans un mode de réalisation particulier de l'invention, les nanotubes de carbone fonctionnalisés peuvent être modifiés (avant l'étape i)) par greffage d'un ou plusieurs métaux sur leur surface préalablement fonctionnalisée. Ainsi, des nanotubes de carbone fonctionnalisés comprenant un dépôt métallique à leur surface sont obtenus.

Ce greffage peut par exemple se faire par voie chimique, par électrodéposition ou par pulvérisation cathodique.

Il est possible de greffer tout type de métal sur la surface des nanotubes de carbone fonctionnalisés tels que Ag, Au, Pa, Pt, Ru, Rh, Al, Ti, Cu ou Ni.

Ce greffage permet ainsi d'améliorer la dispersion des nanotubes de carbone fonctionnalisés dans la mousse métallique lors des étapes i) et ii), et éventuellement dans le mélange de l'étape i).

Dans l'invention, une mousse métallique peut désigner aussi bien une mousse syntactique, qu'une éponge métallique.

Le mélange de nanotubes de carbone fonctionnalisés et d'au moins un métal peut être réalisé selon une étape a) préalable à l'étape i) par voie solide, par voie liquide, ou par voie fondue.

### Etape a)

Dans un mode de réalisation particulier, le métal du mélange obtenu à l'étape a) ou utilisé dans l'étape i) peut être choisi parmi le cuivre, l'aluminium, un alliage de cuivre, un alliage d'aluminium, et un de leurs mélanges.

Dans un mode de réalisation particulier, le métal du mélange obtenu à l'étape a) ou utilisé dans l'étape i) comprend des particules de métal présentant une taille moyenne de diamètre de particules allant de 10 nm à 50 µm environ et de préférence, de 10 nm à 50 nm environ.

Dans un mode de réalisation particulier de l'invention, les nanotubes de carbone fonctionnalisés présentent un diamètre moyen allant de 1 nm à 50 nm environ.

Le mélange selon l'étape a) par voie solide peut être réalisé par mélange mécanique de nanotubes de carbone fonctionnalisés avec au moins un métal, lesdits nanotubes de carbone fonctionnalisés et ledit métal étant sous forme de poudres.

Dans un mode de réalisation particulier, ledit mélange mécanique peut être réalisé à température ambiante, et de préférence sous atmosphère non oxydante (e.g. sous argon ou sous azote).

Ledit mélange mécanique de nanotubes de carbone fonctionnalisés avec au moins un métal est une méthode de mélange de poudres facile à mettre en œuvre, et peut être effectué à l'aide notamment de moyens tels qu'un mélangeur planétaire, un mélangeur à billes en acier ou en céramique, ou des vibrations mécaniques, lesdits moyens pouvant être utilisés seuls ou en combinaison.

De préférence, le mélange par voie solide est réalisé avec un moyen qui évite la dégradation des nanotubes de carbone tel que par exemple un mélangeur à billes en céramique.

Le mélange selon l'étape a) par voie liquide peut être réalisé de préférence, par dispersion de nanotubes de carbone fonctionnalisés et d'au moins un sel de métal dans un milieu liquide, et en soumettant de préférence le mélange ainsi obtenu à un traitement par ultrasons de façon à obtenir une dispersion homogène.

Ledit mélange par voie liquide de l'étape a) comprend alors de préférence les sous-étapes suivantes :
1b) l'introduction de nanotubes de carbone fonctionnalisés dans un milieu liquide tel qu'un alcool inférieur, et leur dispersion par ultrasons, pour former une dispersion homogène,
2b) l'ajout d'au moins un sel de métal à la dispersion homogène telle qu'obtenue à l'étape 1b), et le traitement par ultrasons,
3b) l'évaporation du solvant pour obtenir une poudre,
4b) la calcination de la poudre obtenue à l'étape 3b), notamment à une température pouvant aller de 250°C à 500°C environ, pour obtenir une poudre calcinée,
5b) la réduction de la poudre calcinée obtenue à l'étape 4b), notamment sous hydrogène, pour former ledit mélange.

Cette méthode est particulièrement adaptée dans le cas où les nanotubes de carbone fonctionnalisés de l'étape 1b) ont été préalablement fonctionnalisés par oxydation de surface.

Cette méthode de mélange permet aux nanotubes de carbone fonctionnalisés d'être implantés directement entre les particules de métal et non simplement déposés en surface des particules de métal.

Lorsque cette étape de mélange a) est effectuée par voie solide ou par voie liquide, les agglomérats de nanotubes de carbone fonctionnalisés se cassent et peuvent ainsi se répartir de manière homogène dans le mélange.

Le mélange selon l'étape a) peut être réalisé en mélangeant des nanotubes de carbone fonctionnalisés avec au moins un métal à l'état fondu.

Le mélange selon l'étape a) est réalisé de préférence par voie solide ou par voie liquide, ces deux voies étant faciles à mettre en œuvre tout en évitant la dégradation des nanotubes de carbone.

### Etape i)

L'étape i) permet de disperser les nanotubes de carbone fonctionnalisés ou le mélange de nanotubes de carbone fonctionnalisés et d'au moins un métal dans la mousse métallique.

Dans un mode de réalisation particulier de l'invention, les nanotubes de carbone fonctionnalisés de l'étape i) présentent un diamètre moyen allant de 1 nm à 50 nm environ.

Le métal de la mousse métallique peut être choisi parmi le cuivre, l'aluminium, un alliage de cuivre, un alliage d'aluminium et un de leurs mélanges.

Le métal de la mousse métallique peut être identique ou différent du métal du mélange de l'étape a).

La mousse métallique est de préférence une mousse régulière telle que définie ci-dessus. De cette façon, l'étape i) permet de répartir les nanotubes de carbone fonctionnalisés de façon homogène dans ladite mousse et d'obtenir une structure composite homogène.

Dans un mode de réalisation particulier, la mousse métallique comprend des pores de taille moyenne allant de 10 à 20 mm environ.

La porosité de la mousse métallique peut être d'au moins 60% en volume environ, et de préférence d'au moins 80% en volume environ par rapport au volume total de la mousse métallique.

A titre d'exemple, la mousse métallique utilisée dans l'étape i) peut être de grade commercial telle que la mousse métallique à pores ouverts de commercialisée sous la dénomination commerciale Castfoam® par FTB (Fonderie Tabourin et Bézilles). Cette mousse peut être en aluminium, en alliage d'aluminium, en cuivre, ou en alliage de cuivre.

De préférence, la mousse métallique ne comprend pas d'oxydes métalliques. De cette manière, la présence d'oxygène dans le matériau composite et ainsi, la dégradation des nanotubes de carbone, notamment à des températures élevées, sont évitées.

L'étape i) peut être effectuée au moyen de vibrations mécaniques ou d'ultrasons afin d'optimiser le « remplissage » de la mousse métallique par les nanotubes de carbone fonctionnalisés ou par le mélange de nanotubes de carbone fonctionnalisés et d'au moins un métal.

L'étape i) peut être effectuée manuellement.

La structure composite de l''étape i) est sous la forme d'une mousse métallique à pores ouverts ou semi-ouverts comprenant une dispersion homogène de nanotubes de carbone fonctionnalisés.

### Etape ii)

Les mousses métalliques étant déformables, le compactage de la structure composite selon l'étape ii) est facilité et permet de conduire à un matériau composite sous forme d'une masse solide, notamment de type monobloc tel que par exemple un barreau massif.

Selon une première variante, l'étape ii) est réalisée par pressage, à l'aide notamment d'un appareil choisi parmi les presses hydrauliques, les presses isostatiques à froid ou à chaud et les presses uniaxiales à froid ou à chaud.

L'étape de pressage est réalisée de préférence à chaud, et de manière encore plus préférée sous atmosphère réductrice.

Ainsi, selon cette première variante, la structure composite peut être d'abord placée dans un moule, puis le moule ainsi que la structure composite peuvent subir une pression pouvant aller de 50 à 500 MPa environ.

Selon une deuxième variante, l'étape ii) est réalisée par frittage, c'est-à-dire par consolidation par action de la chaleur.

Il existe globalement deux techniques de frittage : le frittage conventionnel et le frittage flash. L'étape ii) est de préférence effectuée par frittage flash.

La différence majeure entre le frittage conventionnel et le frittage flash réside dans le fait que la source de chaleur n'est pas externe mais qu'un courant électrique (continu, continu pulsé ou alternatif), appliqué *via* des électrodes, passe à travers l'enceinte de pressage conductrice et également dans les cas appropriés, à travers l'échantillon. C'est ce courant électrique qui va chauffer l'échantillon, directement en son sein. De façon générale, le frittage flash permet de consolider des matériaux en des temps beaucoup plus brefs et avec une densité souvent bien meilleure que le frittage conventionnel.

Dans un mode de réalisation particulier, l'étape ii) est réalisée par frittage flash à une pression pouvant aller de 10 à 100 bars environ et/ou à une température pouvant aller de 400 à 900°C environ. Dans le cas où le métal utilisé est l'aluminium, on préfèrera appliquer une température pouvant aller de 400 à 550°C environ et dans le cas où le métal utilisé est le cuivre, on préfèrera appliquer une température pouvant aller de 700 à 900°C environ. Le temps de frittage flash peut aller de préférence de quelques secondes à quelques heures environ.

Lorsque l'étape ii) est réalisée par frittage flash, le contrôle de la diffusion des nanotubes de carbone fonctionnalisés dans le matériau composite est plus facile et le risque de dégradation des interfaces nanotubes de carbone /métal de la mousse métallique et éventuellement des interfaces nanotubes de carbone / métal du mélange de l'étape i) est évité.

La formation d'une masse solide par frittage flash permet d'obtenir un matériau composite avec un taux de densification d'au moins 70% environ et de préférence d'au moins 80% environ.

Le matériau composite de l'invention présente une porosité de préférence d'au plus 5% en volume environ, et de préférence encore d'au plus 1% en volume environ par rapport au volume total dudit matériau composite.

Les étapes i) et ii) ne comprennent pas de préférence l'utilisation d'un liant, notamment de type polymère(s) organique(s). En effet, la fonctionnalisation des nanotubes de carbone est suffisante pour permettre une bonne cohésion carbone/métal.

De préférence, le matériau composite de l'invention est exempt de polymère(s) organique(s). En effet, la présence de polymères organiques peut dégrader ses propriétés électriques, notamment sa conductivité électrique.

Le matériau composite obtenu selon le procédé de l'invention est de préférence uniquement constitué des nanotubes de carbone fonctionnalisés et de la matrice métallique.

Selon une forme de réalisation préférée de l'invention, le matériau composite comprend de 0,05 à 30% en masse de nanotubes de carbone fonctionnalisés.

Dans le matériau composite de l'invention, les groupements chimiques servant de sites d'accroche à la surface des nanotubes de carbone réagissent avec le métal de la mousse métallique et éventuellement avec le métal du mélange de l'étape i) lors de cette étape ii), permettant ainsi l'obtention d'une bonne interface entre le métal ou les métaux et les nanotubes de carbone.

Ainsi, le procédé de l'invention permet de former en deux ou trois étapes un matériau composite comprenant au moins un métal et des nanotubes de carbone fonctionnalisés dans lequel les nanotubes de carbone sont uniformément répartis.

Le matériau composite obtenu après l'étape ii) peut ensuite être manipulé sans risque, en évitant ainsi les contraintes de sécurité liées à l'utilisation directe et prolongée de nanomatériaux tels que les nanotubes de carbone.

Ainsi, grâce au procédé de l'invention, les interfaces nanotubes de carbone/métal ne sont pas ou très peu sollicitées mécaniquement et elles sont conservées tout au long du procédé. Ce procédé permet alors d'obtenir un matériau composite, possédant de bonnes propriétés électriques, notamment en termes de conductivité, et mécaniques.

La présente invention a pour deuxième objet un procédé de fabrication d'un élément électriquement conducteur allongé comprenant des nanotubes de carbone fonctionnalisés et une matrice métallique, caractérisé en ce qu'il comprend les étapes suivantes :
A) la fabrication d'un matériau composite selon le procédé conforme au premier objet de l'invention, et
B) au moins une étape de mise en forme dudit matériau composite obtenu à l'étape précédente A), afin d'obtenir ledit élément électriquement conducteur allongé ayant les dimensions et la forme voulues.

La demanderesse a mis en évidence que ledit procédé conforme au second objet de l'invention permet d'obtenir un élément électriquement conducteur allongé possédant une résistance mécanique 2 à 3 fois supérieure à celle obtenue avec un élément électriquement conducteur allongé formé uniquement d'un métal de type cuivre, aluminium, ou un de leur alliage, et une conductivité électrique augmentée d'environ 20% par rapport à ce dernier.

En effet, le matériau composite obtenu selon l'étape A) peut être utilisé dans une ou plusieurs étapes de mise en forme B) bien connues de l'homme du métier telles que la mise en forme par fusion, par extrusion, ou par déformation plastique.

Selon une première variante, l'étape B) est une étape de mise en forme par déformation plastique ou par extrusion, et le matériau composite fabriqué à l'étape A) comprend de 0,05 à 1% en masse environ de nanotubes de carbone fonctionnalisés, et de préférence de 0,05 à 0,5% en masse environ de nanotubes de carbone fonctionnalisés.

Lorsque la mise en forme est réalisée par déformation plastique, l'étape B) peut comprendre la ou les étapes suivantes : une étape de filage et/ou une étape de tréfilage et/ou une étape de laminage et/ou une étape de martelage du matériau composite de l'étape A).

Selon une deuxième variante, l'étape B) est une étape de mise en forme par fusion et elle comprend les sous-étapes suivantes :
B-1) l'introduction du matériau composite fabriqué à l'étape A) dans un bain métallique liquide,
B-2) le mélange du matériau composite avec le bain métallique liquide, de manière à faire fondre complètement le matériau composite dans le bain métallique liquide, et
B-3) la coulée du mélange de l'étape précédente, pour former ledit élément électriquement conducteur allongé.

Le métal du bain métallique liquide de l'étape B-1) peut être choisi parmi le cuivre, l'aluminium, un alliage de cuivre, un alliage d'aluminium et un de leurs mélanges.

Dans un mode de réalisation particulier, le bain métallique liquide de l'étape B-1) a une température allant de 550°C à 1200°C environ, et de préférence de 700°C à 1100°C environ.

Le mélange de l'étape B-2) peut être effectué par des techniques bien connues de l'homme du métier telles que le brassage mécanique, le brassage magnétique ou l'utilisation d'un courant électromagnétique.

Dans un mode de réalisation particulier, l'étape B-3) de coulée est réalisée à une température de coulée allant de de 550°C à 1200°C environ, et de préférence de 700°C à 1100°C environ. Cette étape de coulée peut comprendre une étape de refroidissement (i.e. solidification) à une vitesse contrôlée.

Dans ce mode de réalisation particulier de mise en forme (i.e. par fusion), le matériau composite fabriqué à l'étape A) comprend de préférence de 0,05 à 5% en masse environ, et de préférence encore de 0,25 à 1% en masse environ de nanotubes de carbone fonctionnalisés.

Ces diverses étapes de déformation et/ou de mise en forme peuvent être réalisées à l'aide de moyens bien connus de l'homme du métier.

L'élément électriquement conducteur allongé obtenu selon le procédé de l'invention est de préférence uniquement constitué des nanotubes de carbone fonctionnalisés et de la matrice métallique.

L'élément électriquement conducteur allongé présente une porosité de préférence d'au plus 1% en volume environ, et de préférence encore d'au plus 0,5% en volume environ par rapport au volume total dudit élément électriquement conducteur allongé.

La présente divulgation a pour troisième objet un câble électrique caractérisé en ce qu'il comprend un élément électriquement conducteur allongé obtenu par le procédé conforme au deuxième objet de l'invention.

Ledit câble présente des propriétés mécaniques et électriques améliorées.

Le câble électrique de la divulgation peut comprendre une pluralité d'éléments électriquement conducteurs allongés obtenus par le procédé conforme au deuxième objet de l'invention.

Dans un mode de réalisation particulier, le câble électrique de la divulgation comprend en outre au moins une couche électriquement isolante entourant ledit élément électriquement conducteur allongé ou la pluralité d'éléments électriquement conducteurs allongés, ladite couche électriquement isolante comprenant au moins un matériau polymère.

Le matériau polymère de la couche électriquement isolante du câble de la divulgation peut être choisi parmi les polymères réticulés et non réticulés, les polymères du type inorganique et du type organique.

Le matériau polymère de la couche électriquement isolante peut être un homo- ou un co-polymère ayant des propriétés thermoplastiques et/ou élastomères.

Les polymères du type inorganique peuvent être des polyorganosiloxanes.

Les polymères du type organique peuvent être des polyoléfines, des polyuréthanes, des polyamides, des polyesters, des polyvinyliques ou des polymères halogénés tels que des polymères fluorés (e.g. polytétrafluoroéthylène PTFE) ou des polymères chlorés (e.g. polychlorure de vinyle PVC).

Les polyoléfines peuvent être choisies parmi les polymères d'éthylène et de propylène. A titre d'exemple de polymères d'éthylène, on peut citer les polyéthylènes linéaires basse densité (LLDPE), les polyéthylènes basse densité (LDPE), les polyéthylènes moyenne densité (MDPE), les polyéthylènes haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène propylène diène monomère (EPDM).

Plus particulièrement, le câble électrique conforme au troisième objet de la divulgation peut être un câble électrique de type câble d'énergie. Dans ce cas, l'élément conducteur électrique allongé fabriqué selon le procédé conforme au deuxième objet de l'invention est entouré par une première couche semi-conductrice, la première couche semi-conductrice étant entourée par une couche électriquement isolante telle que définie précédemment, et la couche électriquement isolante étant entourée par une deuxième couche semi-conductrice.

Dans un mode de réalisation particulier, généralement conforme au câble électrique de type câble d'énergie de la divulgation, la première couche semi-conductrice, la couche électriquement isolante et la deuxième couche semi-conductrice constituent une isolation tricouche. En d'autres termes, la couche électriquement isolante est directement en contact physique avec la première couche semi-conductrice, et la deuxième couche semi-conductrice est directement en contact physique avec la couche électriquement isolante.

Le câble électrique de la divulgation peut comprendre en outre un écran métallique entourant la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs posé(s) en hélice autour de la deuxième couche semi-conductrice, ou d'un écran dit « étanche » de type tube métallique entourant la deuxième couche semi-conductrice. Ce dernier type d'écran permet notamment de faire barrière à l'humidité ayant tendance à pénétrer le câble électrique en direction radiale.

Tous les types d'écrans métalliques peuvent jouer le rôle de mise à la terre du câble électrique et peuvent ainsi transporter des courants de défaut, par exemple en cas de court-circuit dans le réseau concerné.

En outre, le câble de la divulgation peut comprendre une gaine extérieure de protection entourant la deuxième couche semi-conductrice, ou bien entourant plus particulièrement ledit écran métallique lorsqu'il existe. Cette gaine extérieure de protection peut être réalisée classiquement à partir de matériaux thermoplastiques appropriés tels que des HDPE, des MDPE ou des LLDPE ; ou encore des matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »).

D'autres couches, telles que des couches gonflantes en présence d'humidité peuvent être ajoutées entre la deuxième couche semi-conductrice et l'écran métallique lorsqu'il existe et/ou entre l'écran métallique et la gaine extérieure lorsqu'ils existent, ces couches permettant d'assurer l'étanchéité longitudinale du câble électrique à l'eau.

## Revendications

1. Procédé de fabrication d'un matériau composite comprenant des nanotubes de carbone fonctionnalisés et une matrice métallique, **caractérisé en ce qu'**il comprend au moins les étapes suivantes :
i) la dispersion de nanotubes de carbone fonctionnalisés ou d'un mélange de nanotubes de carbone fonctionnalisés et d'au moins un métal, dans une mousse métallique à pores ouverts ou semi-ouverts pour former une structure composite,
ii) le compactage de la structure composite obtenue à l'étape précédente i), pour former un matériau composite sous forme d'une masse solide.

2. Procédé selon la revendication 1, **caractérisé en ce que** la mousse métallique est une mousse syntactique ou une éponge métallique.

3. Procédé selon la revendication 1 ou 2, **caractérisé en ce que** le mélange de de nanotubes de carbone fonctionnalisés et d'au moins un métal est réalisé selon une étape a) préalable à l'étape i) par voie liquide, par voie solide, ou par voie fondue.

4. Procédé selon l'une quelconque des revendications précédentes, **caractérisé en ce que** le métal est choisi parmi le cuivre, l'aluminium, un alliage de cuivre, un alliage d'aluminium, et un de leurs mélanges.

5. Procédé selon l'une quelconque des revendications précédentes, **caractérisé en ce que** le métal de la mousse métallique est choisi parmi le cuivre, l'aluminium, un alliage de cuivre, un alliage d'aluminium, et un de leurs mélanges.

6. Procédé selon l'une quelconque des revendications précédentes, **caractérisé en ce que** la mousse métallique est régulière.

7. Procédé selon l'une quelconque des revendications précédentes, **caractérisé en ce que** la mousse métallique comprend des pores de taille moyenne allant de 10 à 20 mm.

8. Procédé selon l'une quelconque des revendications précédentes, **caractérisé en ce que** l'étape ii) est réalisée par pressage.

9. Procédé selon l'une quelconque des revendications 1 à 7, **caractérisé en ce que** l'étape ii) est réalisée par frittage.

10. Procédé selon l'une quelconque des revendications précédentes, **caractérisé en ce que** le matériau composite de l'étape ii) présente une porosité d'au plus 5% en volume par rapport au volume total dudit matériau composite.

11. Procédé selon l'une quelconque des revendications précédentes, **caractérisé en ce que** le matériau composite comprend de 0,05 à 30% en masse de nanotubes de carbone fonctionnalisés.

12. Procédé de fabrication d'un élément électriquement conducteur allongé comprenant des nanotubes de carbone fonctionnalisés et une matrice métallique, **caractérisé en ce qu'**il comprend les étapes suivantes :
A) la fabrication d'un matériau composite selon le procédé tel que défini à l'une quelconque des revendications 1 à 11, et
B) au moins une étape de mise en forme dudit matériau composite obtenu à l'étape précédente A), afin d'obtenir ledit élément électriquement conducteur allongé ayant les dimensions et la forme voulues.

13. Procédé selon la revendication 12, **caractérisé en ce que** l'étape B) est une étape de mise en forme par fusion, par extrusion, ou par déformation plastique.

14. Procédé selon la revendication 13, **caractérisé en ce que** l'étape B) est une étape de mise en forme par extrusion ou par déformation plastique, et le matériau composite fabriqué à l'étape A) comprend de 0,05 à 1% en masse de nanotubes de carbone fonctionnalisés.

15. Procédé selon la revendication 13, **caractérisé en ce que** l'étape B) est une étape de mise en forme par fusion et elle comprend les sous-étapes suivantes :
B-1) l'introduction du matériau composite fabriqué à l'étape A) dans un bain métallique liquide,
B-2) le mélange du matériau composite avec le bain métallique liquide, de manière à faire fondre complètement le matériau composite dans le bain métallique liquide, et
B-3) la coulée du mélange de l'étape précédente pour former ledit élément électriquement conducteur allongé.

16. Procédé selon la revendication 15, **caractérisé en ce que** le métal du bain métallique liquide de l'étape B-1) est choisi parmi le cuivre, l'aluminium, un alliage de cuivre, un alliage d'aluminium et un de leurs mélanges.

17. Procédé selon la revendication 15 ou 16, **caractérisé en ce que** le bain métallique liquide de l'étape B-1) a une température allant de 550°C à 1200°C.

18. Procédé selon l'une quelconque des revendications 15 à 17, **caractérisé en ce que** le matériau composite fabriqué à l'étape A) comprend de 0,05 à 5% en masse de nanotubes de carbone fonctionnalisés.

19. Matériau composite, **caractérisé en ce qu'**il est obtenu selon un procédé tel que défini à l'une quelconque des revendications 1 à 11, et **en ce qu'**il comprend des nanotubes de carbone fonctionnalisés dispersés de façon homogène dans une matrice métallique, lesdits nanotubes de carbone étant fonctionnalisés en surface par des groupements chimiques capables de se lier au métal de la matrice métallique.

## Patentansprüche

1. Verfahren zur Herstellung eines Verbundwerkstoffs, umfassend funktionalisierte Kohlenstoff-Nanoröhren und eine metallische Matrix, **dadurch gekennzeichnet, dass** es mindestens die folgenden Schritte umfasst:
i) Dispergieren funktionalisierter Kohlenstoff-Nanoröhren oder eines Gemischs aus funktionalisierten Kohlenstoff-Nanoröhren und mindestens einem Metall in einem Metallschaum mit offenen oder halboffenen Poren, um eine Verbundstruktur zu bilden,
ii) Kompaktieren der in vorangehendem Schritt i) erhaltenen Verbundstruktur, um einen Verbundwerkstoffs in Form einer festen Masse zu bilden.

2. Verfahren nach Anspruch 1, **dadurch gekennzeichnet, dass** der Metallschaum ein syntaktischer Schaum oder ein Metallschwamm ist.

3. Verfahren nach Anspruch 1 oder 2, **dadurch gekennzeichnet, dass** das Gemisch aus funktionalisierten Kohlenstoff-Nanoröhren und mindestens einem Metall gemäß einem Schritt a) vor dem Schritt i) auf flüssigem Weg, auf festem Weg oder auf geschmolzenem Weg hergestellt wird.

4. Verfahren nach einem der vorangehenden Ansprüche, **dadurch gekennzeichnet, dass** das Metall aus Kupfer, Aluminium, einer Kupferlegierung, einer Aluminiumlegierung und einem ihrer Gemische ausgewählt ist.

5. Verfahren nach einem der vorangehenden Ansprüche, **dadurch gekennzeichnet, dass** das Metall des Metallschaums aus Kupfer, Aluminium, einer Kupferlegierung, einer Aluminiumlegierung und einem ihrer Gemische ausgewählt ist.

6. Verfahren nach einem der vorangehenden Ansprüche, **dadurch gekennzeichnet, dass** der Metallschaum regelmäßig ist.

7. Verfahren nach einem der vorangehenden Ansprüche, **dadurch gekennzeichnet, dass** der Metallschaum Poren mittlerer Größe von 10 bis 20 mm umfasst.

8. Verfahren nach einem der vorangehenden Ansprüche, **dadurch gekennzeichnet, dass** der Schritt ii) durch Pressen durchgeführt wird.

9. Verfahren nach einem der Ansprüche 1 bis 7, **dadurch gekennzeichnet, dass** der Schritt ii) durch Sintern durchgeführt wird.

10. Verfahren nach einem der vorangehenden Ansprüche, **dadurch gekennzeichnet, dass** der Verbundwerkstoff von Schritt ii) eine Porosität von höchsten 5 Vol.-% in Bezug auf das Gesamtvolumen des Verbundwerkstoffs aufweist.

11. Verfahren nach einem der vorangehenden Ansprüche, **dadurch gekennzeichnet, dass** der Verbundwerkstoff 0,05 bis 30 Ma% funktionalisierte Kohlenstoff-Nanoröhren umfasst.

12. Verfahren zur Herstellung eines länglichen elektrisch leitenden Elements, umfassend funktionalisierte Kohlenstoff-Nanoröhren und eine metallische Matrix, **dadurch gekennzeichnet, dass** es die folgenden Schritte umfasst:
A) das Herstellen eines Verbundwerkstoffs gemäß dem Verfahren nach einem der Ansprüche 1 bis 11, und
B) mindestens einen Formungsschritt des in vorangehendem Schritt A) erhaltenen Verbundwerkstoffs, um das längliche elektrisch leitende Element mit den Abmessungen und der Form zu erhalten, die gewollt sind.

13. Verfahren nach Anspruch 12, **dadurch gekennzeichnet, dass** der Schritt B) ein Formungsschritt durch Schmelzen, durch Extrusion oder durch plastische Verformung ist.

14. Verfahren nach Anspruch 13, **dadurch gekennzeichnet, dass** der Schritt B) ein Formungsschritt durch Extrusion oder durch plastische Verformung ist und der in Schritt A) hergestellte Verbundwerkstoff 0,05 bis 1 Ma% funktionalisierte Kohlenstoff-Nanoröhren umfasst.

15. Verfahren nach Anspruch 13, **dadurch gekennzeichnet, dass** der Schritt B) ein Formungsschritt durch Schmelzen ist und er die folgenden Unterschritte umfasst:
B-1) Einbringen des in Schritt A) hergestellten Verbundwerkstoffs in ein flüssiges Metallbad,
B-2) Mischen des Verbundwerkstoffs mit dem flüssigen Metallbad, um den Verbundwerkstoff in dem flüssigen Metallbad vollständig zu schmelzen, und
B-3) Gießen des Gemischs des vorangehenden Schritts, um das längliche elektrisch leitende Element zu bilden.

16. Verfahren nach Anspruch 15, **dadurch gekennzeichnet, dass** das Metall des flüssigen Metallbads von Schritt B-1) aus Kupfer, Aluminium, einer Kupferlegierung, einer Aluminiumlegierung und einem ihrer Gemische ausgewählt wird.

17. Verfahren nach Anspruch 15 oder 16, **dadurch gekennzeichnet, dass** das flüssige Metallbad von Schritt B-1) eine Temperatur von 550 °C bis 1200 °C hat.

18. Verfahren nach einem der Ansprüche 15 bis 17, **dadurch gekennzeichnet, dass** der in Schritt A) hergestellte Verbundwerkstoff 0,05 bis 5 Ma% funktionalisierte Kohlenstoff-Nanoröhren umfasst.

19. Verbundwerkstoff, **dadurch gekennzeichnet, dass** er nach einem Verfahren nach einem der Ansprüche 1 bis 11 hergestellt ist und dass er funktionalisierte Kohlenstoff-Nanoröhren umfasst, die gleichmäßig in einer metallischen Matrix dispergiert sind, wobei die Kohlenstoff-Nanoröhren an der Oberfläche durch chemische Gruppen funktionalisiert sind, die imstande sind, sich mit dem Metall der metallischen Matrix zu verbinden.

## Claims

1. Method for manufacturing a composite material comprising functionalized carbon nanotubes and a metal matrix, **characterized in that** it comprises at least the following steps:
i) dispersing functionalized carbon nanotubes, or a mixture of functionalized carbon nanotubes and at least one metal, in a metal foam having open or semi-open pores, to form a composite structure;
ii) compacting the composite structure obtained at preceding step i) to form a composite material in the form of a solid mass.

2. The method according to claim 1, **characterized in that** the metal foam is a syntactic foam or metal sponge.

3. The method according to claim 1 or 2, **characterized in that** the mixture of functionalized carbon nanotubes and at least one metal is prepared at a step a) prior to step i), via liquid process, solid process or molten process.

4. The method according to any of the preceding clams, **characterized in that** the metal is selected from among copper, aluminium, a copper alloy, aluminium alloy, and one of the mixtures thereof.

5. The method according to any of the preceding claims, **characterized in that** the metal of the metal foam is selected from among copper, aluminium, a copper alloy, aluminium alloy and one of the mixtures thereof.

6. The method according to any of the preceding claims, **characterized in that** the metal foam is regular.

7. The method according to any of the preceding claims, **characterized in that** the metal foam has pores of mean size ranging from 10 to 20 mm.

8. The method according to any of the preceding claims, **characterized in that** step ii) is performed via pressing

9. The method according to any of claims 1 to 7, **characterized in that** step ii) is performed via sintering.

10. The method according to any of the preceding claims, **characterized in that** the composite material of step ii) has porosity of no more than 5 volume % relative to the total volume of said composite material.

11. The method according to any of the preceding claims, **characterized in that** the composite material comprises from 0.05 to 30 weight % of functionalized carbon nanotubes.

12. Method for manufacturing an elongate, electrically conductive element comprising functionalized carbon nanotubes and a metal matrix, **characterized in that** it comprises the following steps:
A) preparing a composite material according to the method such as defined in any of claims 1 to 11; and
B) at least one forming step of said composite material obtained at preceding step A), to obtain said elongate, electrically conductive element having the desired size and shape.

13. The method according to claim 12, **characterized in that** step B) is a forming step via fusion, extrusion or plastic deformation.

14. The method according to claim 13, **characterized in that** step B) is a forming step via extrusion or plastic deformation, and the composite material prepared at step A) comprises from 0.05 to 1 weight % of functionalized carbon nanotubes.

15. The method according to claim 13, **characterized in that** step B) is a forming step via fusion and comprises the following sub-steps:
B-1) placing the composite material prepared at step A) in a liquid metal bath;
B-2) mixing the composite material with the liquid metal bath to obtain complete melting of the composite material in the liquid metal bath; and
B-3) casting the mixture of the preceding step to form said elongate, electrically conductive element.

16. The method according to claim 15, **characterized in that** the metal of the liquid metal bath at step B-1) is selected from among copper, aluminium, a copper alloy, aluminium alloy and one of the mixtures thereof.

17. The method according to claim 15 or 16, **characterized in that** the liquid metal bath at step B-1) has a temperature ranging from 550 °C to 1200 °C.

18. The method according to any of claims 15 to 17, **characterized in that** the composite material prepared at step A) comprises from 0.05 to 5 weight % of functionalized carbon nanotubes.

19. Composite material, **characterized in that** it is obtained with a method such as defined in any of claims 1 to 11, and **in that** it comprises functionalized carbon nanotubes dispersed homogeneously in a metal matrix, said carbon nanotubes being functionalized on the surface by chemical groups able to bind to the metal of the metal matrix.
